Europäisches Patentamt

European Patent Office

Office européen des brevets

(11) Publication number: **0 149 012**
**A2**

(12) # EUROPEAN PATENT APPLICATION

(21) Application number: **84111975.3**

(22) Date of filing: **05.10.84**

(51) Int. Cl.⁴: **F 16 H 5/64**

(30) Priority: **07.10.83 JP 187084/83**

(43) Date of publication of application:
**24.07.85 Bulletin 85/30**

(84) Designated Contracting States:
**DE FR GB**

(71) Applicant: **NISSAN MOTOR CO., LTD.**
**No.2, Takara-cho, Kanagawa-ku**
**Yokohama-shi Kanagawa-ken 221(JP)**

(72) Inventor: **Sugano, Kazuhiko**
**Totsuka-Hairaizu B1022 No. 884-1, Kamikurata-cho**
**Totsuka-ku Yokohama City(JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Transmission control system including vehicle speed responsive orifice valve which modifies friction element engagement rate.**

(57) In order to reduce the rate at which a friction element is engaged during a downshift in a multi-forward speed automatic automotive transmission, an orifice valve is arranged to be responsive to a vehicle speed signal (e.g. governor pressure) in a manner to permit fluid communication between a shift valve and the friction element via two flow restrictions when the vehicle speed is below a predetermined level and restrict the communication to a single flow restriction when the vehicle speed exceeds said level.

EP 0 149 012 A2

./...

FIG.1

## TRANSMISSION CONTROL SYSTEM INCLUDING VEHICLE SPEED RESPONSIVE ORIFICE VALVE WHICH MODIFIES FRICTION ELEMENT ENGAGEMENT RATE

### BACKGROUND OF THE INVENTION

#### Field of the Invention

The present invention relates generally to an automatic automotive transmission hydraulic control system and more specifically to a system which includes an orifice valve which modifies the rate at which a friction element is engaged.

#### Description of the Prior Art

In previously proposed transmission control systems it has been proposed to use a hydraulic fluid accumulator to attenuate shift shock and the like. An example of such an accumulator is disclosed in Maintenance manual for Nissan OD built-in type automatic transmissions L4N71B and E4N71B, Accumulator valve, pp 46-47, November 1982. However, in the case that an accumulator of the above nature is used in conjunction with a friction element which is engaged during a downshift, such as 4-3 downshift, a drawback has been encountered in that an orifice which is associated with the accumulator arrangement provides an essentially constant orifice effect irrespective of the vehicle speed. This induces the problem that even though it is preferable to prolong the engagement time at high vehicle speeds particularly during a 4-3 downshift by way of example, to allow the engine to race slightly and raise the engine speed to a level which tends to match that which will occur subsequent to the completion of the downshift, the fixed nature of the orifice prevents same and partially offsets the advantages derived by the provision of th accumulator. Accordingly, it has been hitherto difficult to obtain shock free downshifting especially at high vehicle speeds despite the provision of a shock attenuating accumulator.

## SUMMARY OF THE INVENTION

It is an object of the present invention to provide a simple valve arrangement via which friction element engagement can be modified to eliminate shift shock particular during downshifting at relatively high vehicle speeds.

In brief, the above object is fullfilled by an arrangement wherein in order to reduce the rate at which a friction element is engaged during a downshift in a multi-forward speed automatic automotive transmission, an orifice valve is arranged to be responsive to a vehicle speed signal (e.g governor pressure) in a manner to permit fluid communication between a shift valve and the friction element via two flow restrictions when the vehicle speed is below a predetermined level and restrict the communication to a single flow restriction when the vehicle speed exceeds said level.

More specifically, the present invention takes the form of a transmission control system for a transmission having an output shaft, which includes a friction element which is engageable to produce a forward speed ratio, a first device for selectively supplying hydraulic fluid under pressure to the friction element through a first flow restriction, a second device which produces a signal which varies with an operational parameter of the transmission, and which features an orifice valve interposed between the first device and the friction element for increasing the flow restriction between the first device and the friction element in response to the magnitude of the signal increasing above a predetermined level.

BRIEF DESCRIPTION OF THE DRAWINGS

The features and advantages of the arrangement of the present invention will become more clearly appreciated from the following description taken in conjunction with the accompanying drawings in which:

Fig. 1 is a section view of a first embodiment of the present invention;

Figs. 2 and 3 are graphs showing the friction element engagement characteristics derived with the first embodiment during low speed and high speed downshifts, respectively; and

Fig. 4 shows a second embodiment of the present invention.

DESCRIPTION OF THE PREFERRED EMBODIMENTS

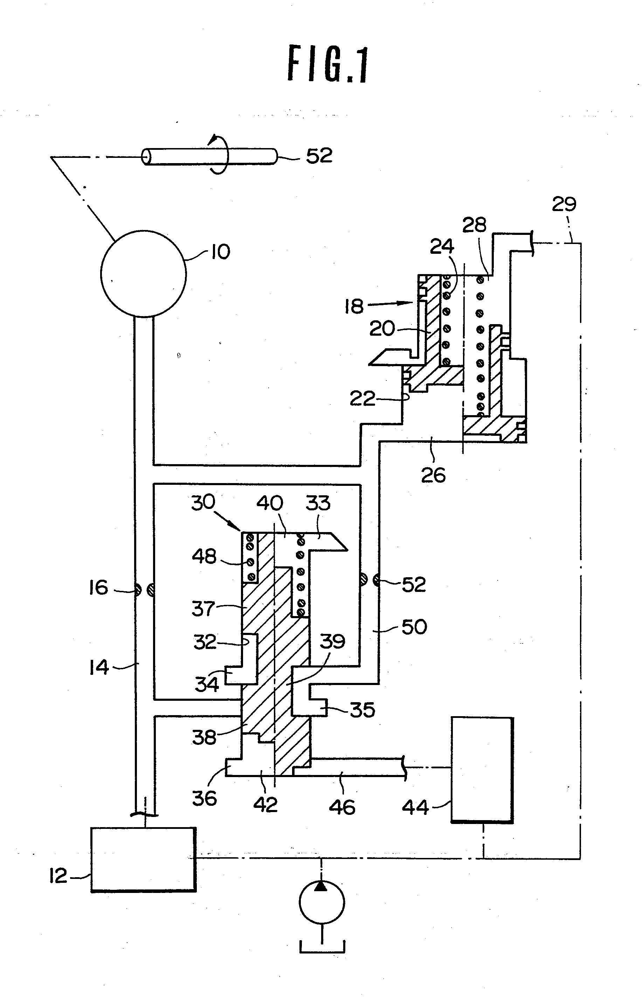

Fig. 1 shows schematically a first embodiment of the present invention. For the sake of explantion let it be assumed that the transmission into which this embodiment of the invention is incorporated is a four forward speed planetary gear transmssion and that the friction element 10 is in fact a clutch which is engaged during a 4-3 downshift. For a more detailed description of one example of transmission control system to which the present invention may be applied reference may be had to applicant's copending U.S. Patent Application Serial No. 518,413 filed on July 29, 1983 in the name of Sugano, or applicant's corresponding copending European Patent Application No. 83107503.1 filed on July 29, 1983.

It should be noted that the valve which characterizes the present invention may be used in conjunction with clutch C3 and accumulator 140 disclosed in the above mentioned documents but is not specifically limited to same and may find application in conjunction with any other friction element/accumulator arrangement wherein a variable orifice effect is desirable.

The content of the above mentioned applications is hereby incorporated by reference thereto.

In the arrangement illustrated in Fig. 1, friction element 10 is arranged to be supplied line pressure from a 3-4 shift valve 12 via conduit 14. In order to attenuate shift shock, a first flow restriction or orifice 16 is disposed in conduit 14 and an accumulator 18 arranged to communicate with conduit 14 a location downstream of the orifice 16. This accumulator 18 includes a stepped piston 20 which is reciprocatively disposed in a stepped bore 22. A spring 24 is arranged to bias the piston 20 in a direction which minimizes the volume of a chamber 26 which is in fluid communication with friction element 10. Line pressure is supplied to a chamber 28 of the accumulator via conduit 29. With this arrangement, as diameter of the piston 20 exposed to chamber 26 is greater than that exposed to chamber 28, upon line pressure being fed to the friction element 10 via conduit 14 to induce a shift from one gear ratio the next lower one, the force produced by the fluid in chamber 26 overcomes that produced by the combination of the fluid and spring (24) in chamber 28 and the piston 20 moves upwardly (as seen in the drawings) to increase the volume of chamber 26 and attenuate the rate at which pressure builds in the friction element 10.

An orifice valve 30 which characterizes the present invention, in this embodiment takes the form of a spool valve including a bore 32 in which ports 33, 34, 35 & 36 are formed and a spool valve element 39 having first and second lands 37, 38 thereon. As shown, the spool is received in bore so as to define variable volume chambers at each end thereof. The upper chamber 40 communicates with port 33 which in this instance acts as a drain. The lower chamber 42 is communicated via port 36 with the governor valve 44 of the transmission via conduit 46. A spring 48 is disposed in the upper chamber 40 and arranged to bias the spool valve element 34 in a direction to minimize the volume of chamber 42.

Port 35 of the orifice valve is arranged to communicate with conduit 14 at a location upstream of the orifice 16 while port 34 is arranged to communicate with both of the accumulator 18 and conduit 16 (at a location downstream of orifice) via a conduit 50. A second orifice 52 is disposed in conduit 50.

When the rotational speed of the output shaft 54 of the transmission (viz., the vehicle speed) is relatively low, the governor pressure fed to chamber 42 is insufficient to move the spool valve element 34 against the bias of spring 48, the latter being arranged to hold the spool valve element 34 in the position shown in right hand half section until a predetermined governor pressure prevails in chamber 42. Viz., a pressure which is generated only upon the vehicle speed having reached or exceeded a predetermined value. Under these conditions (viz., low governor pressure) land 38 of spool valve element 34 is located so as to open port 35 and therefore permit pressurized hydraulic fluid from the shift valve 12 to be fed to the accumulator 18 and the friction element 10 via both flow restrictions 16, 52. The orifice effect provided by both flow restrictions or orifices 16, 52 is selected to produce a friction element engagement rate which is suited to low speed shifting.

Upon the governor pressure exceeding the previously mentioned predetermined level, the spool valve element 34 moves upwardly against the bias of spring 48 to close port 35 and therefore cut off communication between port 35 and port 34. This of course means that all of the pressurized hydraulic fluid from the shift valve 12 must pass through a single flow restrictor, viz., orifice 16. Under these conditions the rate at which the pressure builds in the accumulator 18 and friction element 10 is reduced as compared with the former case wherein two orifices are available. Accordingly, the engagement time of the friction element is increased. By appropriately selecting orifice 16, it is possible to suitably prolong the engagement time of the friction element during high vehicle speed downshifting.

Of course having determined the appropriate size for orifice 16, it is very easy to select the size of orifice 52 so as to obtain the desired engagement rate at low vehicle speeds.

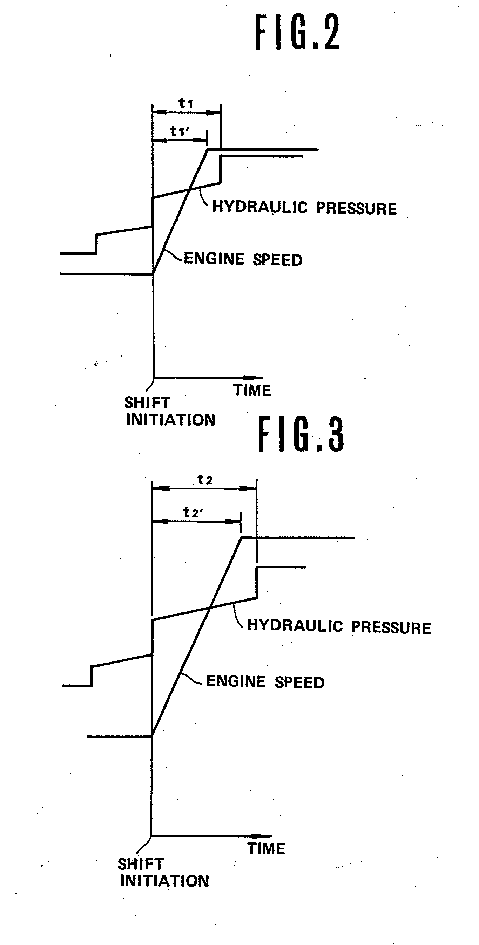

Figs. 2 and 3 show the engagement characteristics which may be derived at low and high vehicle speeds, respectively. As shown in Fig. 2, when both orifices 16, 52 are used, at time $t_1$ seconds after the initiation of the shift, the hydraulic pressure in the friction element 10 maximizes. At a time $t_1'$ seconds the engine RPM ceases to increase and becomes constant. In comparison when only one orifice (viz., orifice 16) is available (see Fig. 3), the time at which the pressure in the friction element 10 maximizes is increased to $t_2$ seconds while the engine speed levels off after a period of $t_2'$ seconds. As a result of the increased engagement time at high speeds the engine speed is able to rise to a value proportionally higher than in the case of a low engine speed downshift, thereby permitting the engine speed to rise during the shift to approximately the level whereat a jolt produced by a sudden acceleration of the engine which tends to occur due to the downshifting, is avoided.

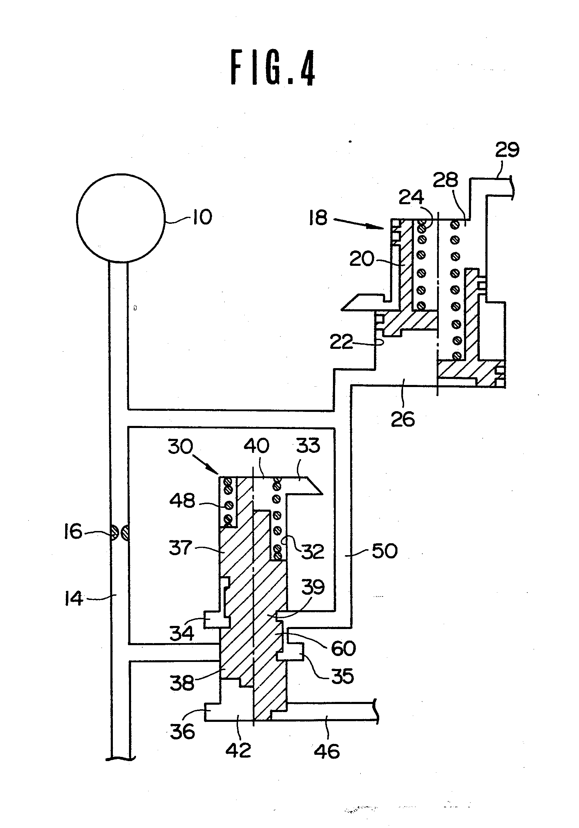

Fig. 4 shows a second embodiment of the present invention. This embodiment differs from the first in that the second orifice 52 is replaced by a third land 60 on the spool valve element 34. As shown, this land 60 is is arranged to have a diameter slightly less than the section of the bore in which it reciprocates and thus cause a flow restriction beteen ports 34 and 35 when the spool valve element 34 assumes the position illustrated by the right hand half section.

As the function and operation of this embodiment is essentially identical to that of the first further description of same will be omitted for brevity.

WHAT IS CLAIMED IS:

1. In a transmission control system for a transmission having an output shaft:

a friction element which is engageable to produce a forward speed ratio;

a first device for selectively supplying hydraulic fluid under pressure to said friction element through a first flow restriction;

a second device which produces a signal which varies with an operational parameter of said transmission; and

an orifice valve interposed between said first device and said friction element for increasing the flow restriction between said first device and said friction element in response to the magnitude of said signal increasing above a predetermined level.

2. A transmission control system as claimed in claim 2, further comprising:

a hydraulic fluid accumulator which is fluid communicated with said friction element and which damps the rate at which the pressure transmitted via said orifice valve increases in said friction element.

3. A transmission control system as claimed in claim 1, wherein said first device takes the form of a shift control valve.

4. A transmission control system as claimed in claim 1, wherein said second device takes the form of a governor valve of said transmission.

5.  A transmission control system as claimed in claim 1, wherein said orifice valve comprises:

means defining a second orifice; and

a valve element which establishes fluid communication between said first device and said friction element via said second orifice when in a first position thereof and which cuts off the communication when in a second position thereof, said friction element being arranged to assume said second position when the magnitude of said signal is above said predetermined level.

FIG.1

# FIG.2

t1

t1'

HYDRAULIC PRESSURE

ENGINE SPEED

TIME

SHIFT
INITIATION

# FIG.3

t2

t2'

HYDRAULIC PRESSURE

ENGINE SPEED

TIME

SHIFT
INITIATION

# FIG.4